# EUROPEAN PATENT APPLICATION

(11) **EP 1 156 633 A1**
(43) Date of publication of application: **21.11.2001**
(21) Application number: 00440140.2
(22) Date of filing: 15.05.2000
(51) Int. Cl.: H04L 12/64

(54) **Internet telephone network interface**

(71) Applicant: ALCATEL, 75008 Paris (FR)
(72) Inventor: Deshayes, Frédéric, 67800 Bischheim (FR); Guntz, Vincent, 67210 Obernai (FR)
(74) Representative: Rausch, Gabriele, Dr.

(57) **Abstract**

The present invention concerns an interfacing module and a telecommunication device with a long line connection possibility to a LAN including such a module.

Interfacing module for coupling at least one telecommunication device to a local area network LAN, wherein said module (2) contains means for converting reciprocally data from a LAN compatible protocol into a dedicated protocol adapted for long distance line transmission and identical to the protocol used by the concerned telecommunication device(s) (1) or at least compatible with it.

## Description

The present invention concerns generally the connection between a local area network (LAN) and telecommunication devices, especially remote located telecommunication devices, and concerns more particularly an interfacing module coupling at least one telecommunication device to a local area network and a telecommunication device with a particularly long line connection possibility to a LAN, integrating such a detachable interfacing module.

When using LAN connected telecommunication devices, it has been noticed that the limited length transmission possibility in relation with internet protocols acts as a brake on the flexibility of installing new devices, particularly in remote located places in view of the LAN.

Thus, under ANSI/IEEE 802.3 (Ethernet) specification requirements, any internet protocol based telecommunications device (so called IP-phone) must work properly when connected to a local area network LAN via a line of a length of about 100 m. But this condition is not fulfilled for line lengths exceeding noticeably that generally accepted threshold value.

It is nevertheless still of interest to have the possibility to connect an IP-phone via a line of a much longer length, as customers are used to with telecommunication devices working under a dedicated protocol like the one known under UA (Universal Alcatel). For example, if the lodge, an other room or place needs an IP-phone and is located at more than 300 m from the closest local area network connection of a company, existing solutions are not satisfactory.

Indeed, the only known possibility, up to now, to extend the transmission length, is to put every 100 m a repeater (Ethernet one) until the required line length is reached. In this way, the specification requirement is still fulfilled but with a major drawback i.e. a very high cost due to the need of the use and the mounting of several repeaters, which are costly devices, and of their corresponding power supplies.

The problem to be solved by the present invention is to propose a solution enabling a long distance connection between a LAN and a telecommunication device at low costs and in an easy and flexible way.

It should additionally also be possible, with this solution, to connect said telecommunication device over various transmission line lengths without needing any further equipment and to reduce it to a compact structure when not used.

Therefor the present invention first concerns an interfacing module for coupling at least one telecommunication device to a local area network LAN, wherein said module contains means for converting reciprocally data from a LAN compatible protocol into a dedicated protocol adapted for long distance line transmission and identical to the protocol used by the concerned telecommunication device(s) or at least compatible with it.

It also concerns a telecommunication device, in particular an internet protocol based telecommunication device, connected to a local area network via an adapted link, characterized in that it is composed of a telephone set and an interfacing module, said device being able to work in two different physical configurations, i.e. a compact configuration wherein the interfacing module is included or integrated into the telephone set and an extended configuration wherein the interfacing module is installed remotely from said telephone set and linked to the latter by an adapted transmission line.

This invention will be better understood thanks to the following description explaining the physical basis of the invention and a preferred embodiment of the latter as a non limitative example, in connection with the enclosed shematical drawing.

The interfacing module 2 contains means for converting reciprocally data from a LAN compatible protocol into a dedicated protocol adapted for long distance line transmission and identical to the protocol used by the concerned telecommunication device(s) 1 or at least compatible with it and is preferably physically adapted to be mounted on or in, or to be inserted by engagement into the structure of a telecommunication device 1 provided with corresponding receiving means.

Advantageously, said dedicated protocol is suitable for transmission over a distance of several hundred meters, preferably over 800 to 1200 m, depending on the type of the line, as for example the protocol known as Universal Alcatel (UA) by the applicant.

According to a preferred embodiment, the interfacing module 2 consists of an internet protocol transceiver having approximately a plate or board like outside shape (for example the TSC-IP module known as 4098RE by the applicant) and can be connected to several telecommunication devices 1, by providing said module with multiple exit connection sockets or hubs (for example RJ11 type connectors).

By the use of an interface enabling to forward the data, received in IP from the LAN, in a dedicated protocol such as UA, it is again possible to connect the telecommunication device to the LAN via a line of more than 1000 m.

In a practical embodiment, the invention will be realised and presented as a telecommunication device, in particular an internet protocol based telecommunication device, connected to a local area network via an adapted link, characterized in that it is composed of a telephone set 3 and an interfacing module 2 as described before, said device 1 being able to work in two different physical configurations, i.e. a compact configuration wherein the interfacing module 2 is included or integrated into the telephone set 3 and an extended configuration wherein the interfacing module 2 is installed remotely from said telephone set 3 and linked to the latter by an adapted transmission line 4 (see enclosed figure).

The present invention also concerns a telecommunication device per se, in particular an internet protocol based telecommunication device, connected to a local area network via an adapted link, characterized in that said telecommunication device 1 comprises an interfacing module 2 detachably mounted on or into the structure of said device 1, linked for data transmission to said device 1 and to said local area network LAN 5 and able to convert data from a LAN compatible protocol into a dedicated protocol compatible with a long distance line transmission, and vice versa.

Generally, the telecommunication device will consist of an internet protocol phone composed of a telephone set 3 using a dedicated transmitting protocol and an interfacing module 2 forming a transceiver able to convert data from the internet protocol into the dedicated transmitting protocol and vice versa.

This internet protocol (IP) phone 1 may, for example, be composed of the two following parts, i.e. an UA3G telephone set 3 (such as the ones known as 4004, 4010, 4020 or 4035 series from the applicant and using the UA transmitting protocol) and a TSC-IP board 2 (an IP-UA transcoder), and connected, for example, to a PBX 5 by a LAN 4 (see enclosed figure).

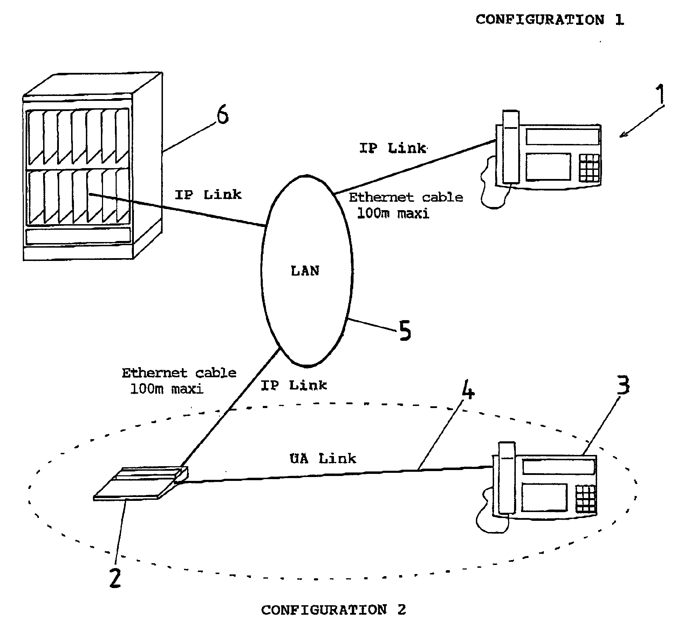

The TSC-IP board module 2 can be included into the IP-phone set 3, thus forming a standard IP-phone 1 which can be connected to a hub of a LAN 5 via an IP-link working reliably up to 100 m (configuration 1 on the drawing). In this configuration, the module 2 can be physically hold within the phone set 3 by closure means (for example a closure plate) or by releasable snap-fit means.

The TSC-IP board module 2 can also be used as a means combining transceiving and repeating functions. In that case, the IP-phone set 3 can be installed, up to 900 meters from the LAN connection with a 0,5 mm twisted-pair line (100 m IP-link + 800 m UA-link) or up to 1300 m with a 0,6 mm twisted-pair line (100 m IP-link + 1200 m UA-link - see configuration 2), from the nearest connection possibility to the LAN 5.

It should be noted that the telecommunication device mentioned herein can, instead of a telephone communication device, also consist of a personal computer or similar.

The present invention is, of course, not limited to the preferred embodiments described herein, changes can be made or equivalents used without departing from the scope of the invention.

## Claims

1. Interfacing module for coupling at least one telecommunication device to a local area network LAN, wherein said module (2) contains means for converting reciprocally data from a LAN compatible protocol into a dedicated protocol adapted for long distance line transmission and identical to the protocol used by the concerned telecommunication device(s) (1) or at least compatible with it.

2. Interfacing module according to claim 1, **characterized in that** said module (2) is physically adapted to be mounted on or in, or to be inserted by engagement into the structure of a telecommunication device (1) provided with corresponding receiving means.

3. Interfacing module according to anyone of claims 1 and 2, **characterized in that** said dedicated protocol is suitable for transmission over a distance of several hundred meters, preferably over 800 to 1200 m, depending on the type of the line.

4. Interfacing module according to anyone of claims 1 to 3, **characterized in that** it consists of an internet protocol transceiver having approximately a plate or board like outside shape.

5. Interfacing module according to anyone of claims 1 to 4, **characterized in that** it is connected to several telecommunication devices (1).

6. Telecommunication device, in particular an internet protocol based telecommunication device, connected to a local area network via an adapted link, **characterized in that** it is composed of a telephone set (3) and an interfacing module (2) according to anyone of claims 1 to 5, said device (1) being able to work in two different physical configurations, i.e. a compact configuration wherein the interfacing module (2) is included or integrated into the telephone set (3) and an extended configuration wherein the interfacing module (2) is installed remotely from said telephone set (3) and linked to the latter by an adapted transmission line (4).

7. Telecommunication device, in particular an internet protocol based telecommunication device, connected to a local area network via an adapted link, **characterized in that** said telecommunication device (1) comprises an interfacing module (2) detachably mounted on or into the structure of said device (1), linked for data transmission to said device (1) and to said local area network LAN (5) and able to convert data from a LAN compatible protocol into a dedicated protocol compatible with a long distance line transmission, and vice versa.

8. Telecommunication device according to claim 7, wherein the telecommunication device (1) consists of an internet protocol phone composed of a telephone set (3) using a dedicated transmitting protocol and an interfacing module (2) forming a transceiver able to convert data from the internet protocol into the dedicated transmitting protocol and vice versa.
